(19) Europäisches Patentamt
European Patent Office
Office européen des brevets

(11) **EP 4 621 993 A1**

(12) **EUROPEAN PATENT APPLICATION**

(43) Date of publication:
**24.09.2025 Bulletin 2025/39**

(21) Application number: **24386029.3**

(22) Date of filing: **19.03.2024**

(51) International Patent Classification (IPC):
*H01Q 1/32* (2006.01)      *G01S 13/931* (2020.01)
*H01Q 3/26* (2006.01)      *H01Q 3/34* (2006.01)
*H01Q 19/06* (2006.01)      *H01Q 21/08* (2006.01)

(52) Cooperative Patent Classification (CPC):
**H01Q 1/3233; G01S 7/03; G01S 13/426;
G01S 13/931; H01Q 3/2658; H01Q 3/34;
H01Q 19/062; H01Q 21/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Carluccio, Giorgio**
  **5656 AG Eindhoven (NL)**
• **Syed, Wagas Hassan**
  **5656 AG Eindhoven (NL)**
• **Nandagopal, Harish**
  **5656 AG Eindhoven (NL)**
• **Doris, Konstantinos**
  **5656 AG Eindhoven (NL)**
• **Alonso Del Pino, Maria**
  **5656 AG Eindhoven (NL)**
• **Cavallo, Daniele**
  **5656 AG Eindhoven (NL)**
• **Llombart Juan, Nuria**
  **5656 AG Eindhoven (NL)**
• **Nair, Ashwita**
  **5656 AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **RADAR HAVING SCANNING ARRAY ANTENNAS WITH DIELECTRIC LENSING**

(57) Disclosed is a scanning-array radar device comprising a transmitter and a receiver; wherein the transmitter comprises a first lensed scanning-array transmitter unit comprising: an array of transmit antennas each having a respective output feed spaced apart along a first axis; a radio frequency, RF, integrated circuit, IC, configured to operate with the array of transmit antennas as a scanning-array transmitter, and a lens configured to focus radiation from each of the output feeds; and wherein the receiver comprises a first lensed scanning-array receiver unit comprising: an array of receive antennas each having a respective input feed spaced apart along a second axis; a radio frequency, RF, integrated circuit, IC, configured to operate with the array of receive antennas as a scanning-array receiver, and a lens configured to focus radiation reflected from a target towards each of the input feeds.

FIG. 5

EP 4 621 993 A1

# Description

## Field

The present disclosure relates to radar devices such as radar transmitters and to radar receivers, which include at least one array of antennas configured for scanned array operation through a dielectric lens.

## Background

Modern radar systems, particularly for automobile applications, typically operate at radio frequencies, RF, which fall into the millimetre-wave range between 30 GHz and 300 GHz. Many automobile radar systems, currently under development or recently implemented, operate in the 77 GHz range (between approximately 76 to 81 GHz) and the 140 GHz ranges (between 134 and 141GHz and 141-148.5Ghz)).

Some radar systems, in particular but not limited to imaging radar may require high angular resolution, particularly in azimuth (side-to-side for typical automobile applications). Although the resolution requirements in elevation (up-and-down, or height, for typical automobile applications) are generally less stringent, frequently detection according to elevation is also required. Known solutions to this problem include MIMO (multiple input multiple output) arrays using microstrip-based or waveguide based antennas. However, the limitations of such technologies, including limited EIRP (equivalent isotropic radiated power), limited resolution, large distribution losses and limited sensor dimensions, tend to be more apparent at high frequencies, and so, for example, the recent trend from 77 GHz towards 140 GHz operational frequency for many automotive radars have exacerbated the problems.

For applications such as automotive radar, the traditional method of physically rotating a radar transmitter or receiver has been superseded by electronically scanning the device across an angular range of directions, which may also be termed as "field of view" (FOV). Such electronic scanning is typically performed by scanning-array techniques. In a scanning-array radar transmitter, multiple antennas are spaced apart linearly, and used to generate copies of a transmitted signal. The signal may be a continuous or intermittent single frequency tone, or more commonly a tone which has a gradually changing, typically triangular or saw-tooth shaped frequency ("chirp"). The relative phase (and potentially the amplitude) of each copy of the transmitted signal is varied across the antennas, resulting in constructive interference between the copies only at specific angles, resulting in a directionally focussed signal. As will be discussed in more detail below, typically there is more than one unique angle at which the signal is maximum (with minima therebetween), for a specific phase difference; the angle or angles depends on the radiation wavelength, the phase difference, separation between each antenna, and the transmission medium. By varying the phase difference, the direction of the transmitted signal may be scanned across the FoV. As a corollary, the angle of arrival at a scanning-array radar receiver may be determined by calculating the phase offset between antenna at which copies of the incoming signal from the antenna sum to a largest measurable signal.

Maximising the effectiveness of the radar includes maximising object detection. Since this relies on correctly identifying reflections as potential targets, the maximisation and smoothness of the output power, or gain, of both the antennas and receiver (or transmitter) including the antennas, remains a topic of interest.

## Summary

According to a first aspect of the present disclosure, there is provided a scanning-array radar device comprising a transmitter and a receiver; wherein the transmitter comprises a first lensed scanning-array transmitter unit comprising: an array of transmit antennas each having a respective output feed having a phase centre spaced apart along a first axis; a radio frequency, RF, integrated circuit, IC, configured to operate with the array of transmit antennas as a scanning-array transmitter, and a lens configured to focus radiation from each of the output feeds; and wherein the receiver comprises a first lensed scanning-array receiver unit comprising: an array of receive antennas each having a respective input feed having a phase centre spaced apart along a second axis; an RF IC, configured to operate with the array of receive antennas as a scanning-array receiver, and a lens configured to focus radiation reflected from a target towards each of the input feeds. The scanning-array transmitter comprises the lensed scanning-array transmitter unit's RF IC and may be considered to comprise the transmit antennas including the output feeds. The scanning-array receiver comprises the latest phase-array receiver unit's RF IC and may be considered to comprise the receive antennas including the input feeds. Using a lens to focus radiation from (or to) each antenna into a directional beam provided an alternative to conventional phased array techniques. By including a combination of scanning-array techniques using multiple antennas under a lens, such a scanning-array radar device, may have relatively high input and/or output gain, and may be adapted regarding beam directivity or angular discrimination. It may therefore be suitable for a range of applications, including but not limited to automotive radar applications and in particular to short-range radar, medium range radar, and long-range radar for such automotive applications. The combination of multiple antennas under a single lens, wherein the multiple antennas are used to provide directional scanning - typically by weighting at least the amplitudes associated with the antennas -will be referred to hereinunder as a "lensed scanning-array transmitter (or receiver) unit".

In one or more embodiments, the first lensed scanning-array transmitter unit RF IC and the first lensed scanning-array transmitter unit array of antennas are integrated within a transmitter package, and the first lensed scanning-array receiver unit RF IC and the first lensed scanning-array receiver unit array of antennas are integrated within a receiver package. Providing such antenna-in-package solutions may allow for low manufacturing costs, and may provide for high geometrical tolerances between components.

In one or more embodiments the lens is one of elliptical and hyper-hemispherical. Such solutions may provide for a wide range of configurability for the radar device or one or both of the transmitter and receiver.

In one or more embodiments, the scanning-array radar device further comprises: a frequency synthesizer configured to provide a common local oscillator (LO) signal to the first lensed scanning-array transmitter unit RF IC and to the first lensed scanning-array receiver unit RF IC. Providing a common LO signal to each of the reach transmitter unit and the reach receiver units may be convenient for ensuring coherency of the individual antenna's signals, or coherent reception.

In one or more group of embodiments, the transmitter is operable as a first transceiver, and the first lensed scanning-array transmitter unit is a first lensed scanning-array transceiver unit further comprising: a second array of receive antennas each having a respective input having a phase centre spaced apart along a third axis which is parallel to and spaced apart from the first axis, and a second radio frequency, RF, integrated circuit, IC, configured to operate with the second array of receive antennas as a scanning-array receiver; and the receiver is operable as a second transceiver, and the first lensed scanning-array receiver unit is a second lensed scanning-array transceiver unit further comprising: a second array of transmit antennas each having a respective output feed having a phase centre spaced apart along a fourth axis which is parallel to and spaced apart from the second axis, and a second radio frequency, RF, integrated circuit, IC, configured to operate with the second array of transmit antennas as a scanned array transmitter. The scanning-array radar device may therefore be manufactured as a pair of similar units, each acting as both transmitter and receiver. Since the transceivers may be the same, this may be commercially useful to reduce the number of different components required.

In one or more embodiments, the frequency synthesizer is further configured to provide the common local oscillator signal to the first lensed scanning-array transceiver unit second lensed scanning-array transmitter unit RF IC and to the second lensed scanning-array transceiver unit second lensed scanning-array receiver unit RF IC. Thereby may be possible to ensure coherency between the transceivers.

In one or more second group of embodiments, the first axis is parallel to the second axis. According to such embodiments, the or any received signal may have the same polarisation as the or any polarisation of the transmitted signal.

In one or more embodiments, the second array of receive antennas of the first lensed scanning-array transceiver unit are configured to receive reflected radiation having a polarisation which is orthogonal to a polarisation of radiation transmitted by the first array of transmit antennas of the first lensed scanning-array transceiver unit; and the first array of receive antennas of the second lensed scanning-array transceiver unit are configured to receive reflected radiation having a polarisation which is orthogonal to a polarisation of radiation transmitted by the second array of transmit antennas of the second lensed scanning-array transceiver unit. By using orthogonal polarisations between the transmitters of two receivers, effective discrimination between the two signals may be achievable.

In one or more embodiments, the second array of receive antennas of the first lensed scanning-array transceiver unit is configured to receive radiation reflected by a target from radiation transmitted by the second array of transmit antennas of the second lensed scanning-array transceiver unit; and the first array of receive antennas of the second lensed scanning-array transceiver unit is configured to receive radiation reflected by the target from radiation transmitted by the first array of transmit antennas of the first lensed scanning-array transceiver unit.

In one or more embodiments, the scanning-array transmitter of the first lensed scanning-array transmitter unit is configured to scan over angular range of at least 80°. Scanning across a large angular range such as at least 80° may be useful particular for short-range radar applications. Such an angular range of at least 80° may typically be symmetrical about the axis - i.e. at least +/- 40°.

In one or more embodiments, the scanning-array radar device is configured to operate as an automotive radar having an azimuth half-power beamwidth of less than 3° and an elevation half-power beamwidth of less than 20°. Providing a resolution in azimuth which is less than 3° may allow for good discrimination or angular resolution in azimuth, which may be useful for applications such as automotive applications. In general a lower resolution in elevation (such as 10° or more) may be acceptable for applications such as automotive applications.

In one or more third group of embodiments, the scanning-array radar device further comprises a first plurality of transceivers, aligned with the first transceiver along the first axis, and a second plurality of transceivers, aligned with the second transceiver along the second axis. Providing a plurality of transceivers aligned along each of the first and second axes may allow for a larger effective aperture of the scanning-array transmitter. This in turn may allow for more accurate angular resolution, particularly in azimuth.

In one or more such embodiments each of the first transceiver and the first plurality transceivers abuts a neighbouring transceiver of the first transceiver and the first plurality of transceivers; and each of the second transceiver and the second plurality transceivers abuts a neighbouring transceiver of the second transceiver and the second plurality of transceivers, and abuts a transceiver of the first transceiver and the first plurality of transceivers. Abutting neighbouring transceivers may assist in minimising the footprint of the scanning-array radar device. In some applications, such as automotive applications for small automobiles, minimising the footprint or overall dimensions of the scanning-array radar device may be desirable.

In one or more embodiments, the scanning-array radar device is configured to operate in one of an RF frequency range between 76 GHz and 81 GHz, and RF frequency range between 134 GHz and 141 GHz. Although the present disclosure is not limited to these frequency ranges, these ranges are, in many jurisdictions, allocated for radar applications such as automotive radar.

In one or more of a fourth group of embodiments, the first axis is orthogonal to the second axis. In one or more such embodiments, the scanning-array radar device further comprises a first plurality of transmitters, aligned with the first transmitter along the first axis, and a plurality of receivers, aligned with the receiver along the second axis. By aligning multiple transmitters along a first axis which is orthogonal to a second axis along which multiple receivers are aligned, the effective aperture of the scanning-array radar is increased for both the transmitter and receiver. This may allow for more precise angular resolution in both azimuth and elevation.

In one or more such embodiments, the lens of the transmitter and a lens of each of the plurality of transmitters each have first focal length, in a direction of the first axis, and a second focal length, different to the first focal length, in a direction of the second axis. Providing a different focal length in a first (x) direction compared to the focal length in and orthogonal second (y) direction may provide for different locations of focusing of the transmitted and/or received signal. These and other aspects of the invention will be apparent from, and elucidated with reference to, the embodiments described hereinafter.

Brief description of Drawings

Embodiments will be described, by way of example only, with reference to the drawings, in which

FIG. 1 shows a schematic view of a lensed scanning-array transmitter (or receiver) unit;
FIG. 2 shows the radiation patterns from coherent excitation of multiple antennas elements of a multi-antenna lensed scanning-array transmitter unit, steered to each of several different directions;
FIG. 3 shows a plurality of scanning-array transmitter units aligned along the same axis as the antennas within each unit;
FIG.4 show the radiation pattern from an array of lensed scanning-array transmitter (or receiver) units;
FIG. 5 shows, schematically, an analog beam-forming transmitter array, consistent with one or more embodiments of the present disclosure;
FIG. 6 illustrates a lensed scanning-array transmitter unit along with a plurality of three further such unit, each driven by the same LO signal from a frequency synthesiser;
FIG. 7 shows, schematically, a digital beam-forming architecture, for a receiving array, consistent with one or more embodiments of the present disclosure;
FIG. 8 shows a lens array receiving unit along with a plurality of three further such units, each processed by an ADC and a MIMO process unit;
FIG. 9 shows the (incoherent) receive pattern from the groups of antenna which are in the same relative positions at each unit;
FIG. 10 shows a scanning-array radar device comprising a transmitter and a receiver, according to a first group of embodiments of the present disclosure;
FIG. 11 shows two-way radiation patterns (i.e. from the transmit unit and by the receive unit) of FIG. 10, at a variety of azimuth scan angles;
FIG. 12 shows a scanning-array radar device comprising a transmitter and a receiver, according to a second group of embodiments of the present disclosure;
FIG. 13 shows two-way radiation patterns (i.e. from the transmit unit and by the receive unit) of FIG. 12, at a variety of azimuth scan angles;
FIG. 14 shows two-way radiation patterns (i.e. from the transmit unit and by the receive unit) of FIG. 12, at two elevation angles;
FIG. 15 shows a scanning-array radar device comprising a transmitter and a receiver, according to a third group of embodiments of the present disclosure;
FIG. 16 shows two-way radiation patterns (i.e. from the transmit unit and by the receive unit) of FIG. 15, at a variety of azimuth scan angles;
FIG. 17 shows two-way radiation patterns (i.e. from the transmit unit and by the receive unit) of FIG. 15, at two elevation angles;
FIG. 18 shows a scanning-array radar device comprising a transmitter and a receiver, according to a fourth group of embodiments of the present disclosure;
FIG. 19 shows two-way radiation patterns (i.e. from the transmit unit and by the receive unit) of FIG. 18, at a scanning angle of approximately 4 degrees to the normal; and
FIG. 20 shows two-way radiation patterns (i.e. from the transmit unit and by the receive unit) of FIG. 18, at a scanning angle of approximately 4 degrees to the normal.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

Detailed description of embodiments

One way of increasing the directionality of a transmitted radar signal, and the gain of the directional peak (or, equivalently, increasing the directional discrimination of a received radar signal), is to focus the transmitted signal by use of an optical lens. At millimetre-wave frequencies of the electro-magnetic (EM) radiation, it is more accurate to refer to a "dielectric lens" rather than an "optical lens". A dielectric lens operates according to refraction at the lens-air interfaces, and speed of radiation through the material which is defined by its refractive index. Dielectric lenses in the millimetre-wave frequency are typically made of plastics materials. A lens has a "F-number", defined as the ratio of its focal length to its diameter. A single lens may be positioned over an array of feed antennas.

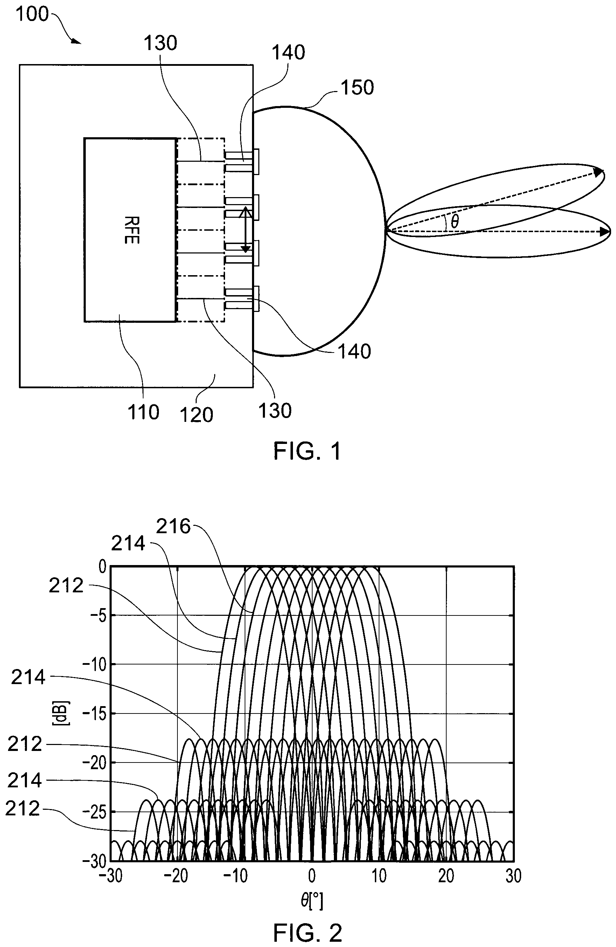

FIG. 1 shows a schematic view of a lensed scanning-array transmitter (or receiver) unit. The unit 100 comprises a semiconductor device or integrated circuit (IC) 110 which is an RF front-end ("RFE"). The RFE 110 may be integrated into a package 120 as shown. In the case of a transmitter, the RFE 110 produces multiple copies of a radar signal, on signal paths such as striplines or feeding lines 130. As shown, the package 120 may include so-called "antenna-in-package" (AiP), or launcher-in-package, in which antenna feeds are integrated within the package. The antenna feeds may be, as shown schematically, slot antennas 140. The antennas are planar, and may be slots, dipoles, patches or a combination of those. The antennas 140 are typically arranged in a linear array at a first major surface of the package 120. A lens 150 is provided over the antennas 140.

In the case that unit 100 is a transmitter unit, the lens acts to focus radiation from the antennas 140 in particular directions θ. The RFE 110 along with antennas 140 is configured to operate as a scanning-array radar transmitter, in which the copies of the radar signal transmitted by two or more of the antenna are adjusted in phase and amplitude. Conversely, in the case that unit 100 is a receiver unit, the lens acts to focus incoming radiation from particular directions towards the antennas 140. Any antenna which receives a copy of the same signal receives it with a different phase and with a different amplitude. Because of the focussing of the lens, typically only two or three receivers receive the signal. The RF front-end IC 110 part-processes the incoming signals for later processing in a processor to reconstruct signals from a specific angles θ and to reconstruct from them reflections from target objects of the radar system.

In order to reach a desired field of view, the lens (or each lens in the case of multiple lenses as will be discussed further hereinbelow) is fed by an array of planar antennas with $N_a$ elements which steer the high gain element pattern in a desired direction. In FIG. 1 four such antennas or antenna elements are shown. The spacing, d, between these antennas is typically arranged to be d~ $\lambda_d.f_\#$ where $\lambda_d$ is the wavelength in the lens material and $f_\#$ is the equivalent focal to diameter ratio of the lens. The spacing is chosen to maximize the gain of the individual element while achieving continuous scanning of the element pattern. The field of view (FoV) will then be determined based on the number of antennas below each lens:

$$FoV \sim Na. \lambda_0 / Dlens$$

where $\lambda_0$ is the wavelength in free space. And Dlens is the diameter of the lens. The steering of this pattern can be performed using digital or analog beam-scanning architectures where the amplitude and phases of the planar antennas are varied depending on the desired steering direction. The amplitude and phase of each antenna, i, is known as the weight wi, of that antenna. To achieve scanning of the complete array pattern, the amplitude and phases between the different array elements are modified. Because of the focussing action of the lens, the amplitude of some, or even most, of the array elements will be zero.

FIG. 2 shows the radiation pattern from coherent excitation of multiple antennas or antenna elements of such a multi-antenna lensed scanning-array transmitter unit, steered (at 212, 214, 216, etc) to each of several different directions or values of θ (an overlay of 11 directions is shown). As can be seen from the figure, the antenna steering results in a main beam at a given angle θ, along with sidelobes. (In this example, the first sidelobes are separated from the main lobe by about 10° and are about 18 dBi weaker, second sidelobes are offset by another approximately 7° and reduced in strength by a further 8 dBi).

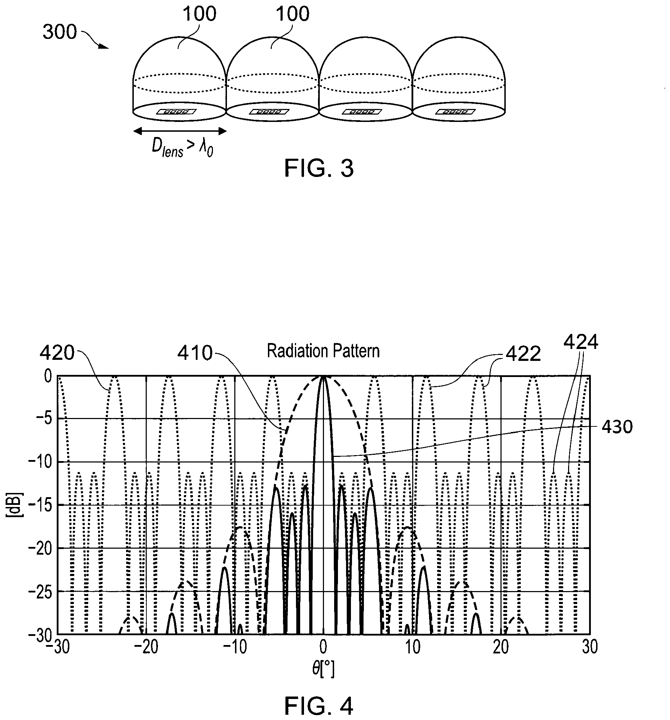

In order to improve the directionality, the size of the array of antennas may be increased. This may be conveniently achieved by use of multiple lensed scanning-array transmitter units 100, as is illustrated in FIG. 3. FIG. 3 shows a plurality of scanning-array transmitter units 100 aligned along the same axis as the antennas 140 within each unit. FIG. 3 shows an example multi-lens transmitter 300 in which there are four such scanning-array transmitter units 100.

The radiation pattern (that is to say signal strength, dBi, plotted against angle θ) of such a multi-lens transmitter 300 is shown in FIG. 4. The figure has two interacting components which interact to result in the final radiation pattern from the multi-lens transmitter 300. Firstly shown, at 410, is the radiation pattern of a single antenna element 140 has, as mentioned previously with respect to figure 2, a main beam and sidelobes, the first of which is about 10° offset from the main beam and about 18 dBi weaker. The second component is the array factor 420. This results from the interference between both individual antenna elements within a single lensed unit 100, and the multiple lensed units. Because the total number of elements are not uniformly spaced, but are grouped within individual lenses, this array factor exhibits grating patterns, with main peaks 422 spaced apart by about 7°, and between them sub-peaks 424 with a spacing of approximately 2°. The multiplication of these two components results in the overall radiation pattern from the multi-lens transmitter 300.

Thus, coherent transmitted signals Tx (or received signals Rx) from the cascaded radar may be transmitted (and received) by an array of lens antennas to achieve high gain per element, reduce grating lobes and enhance the radar angular resolution. FIG. 3 shows an array of Ni lenses with diameters larger than the wavelength (such that Dlens > $\lambda$0), corresponding to the array period. Because of the electrically large periodicity, the array factor associated with such array has multiple grating lobes as indicated in FIG. 4 (420). When the lenses in the array are illuminated with high aperture efficiency with an adequate feed, the element pattern has sufficient directivity (410) to reduce the level of the grating lobes in the array pattern as also indicated in FIG. 4 (430). Therefore, lens array can enhance the angular resolution by a factor of Ni, relative to a single lens of diameter Dlens, while achieving low levels of grating lobes.

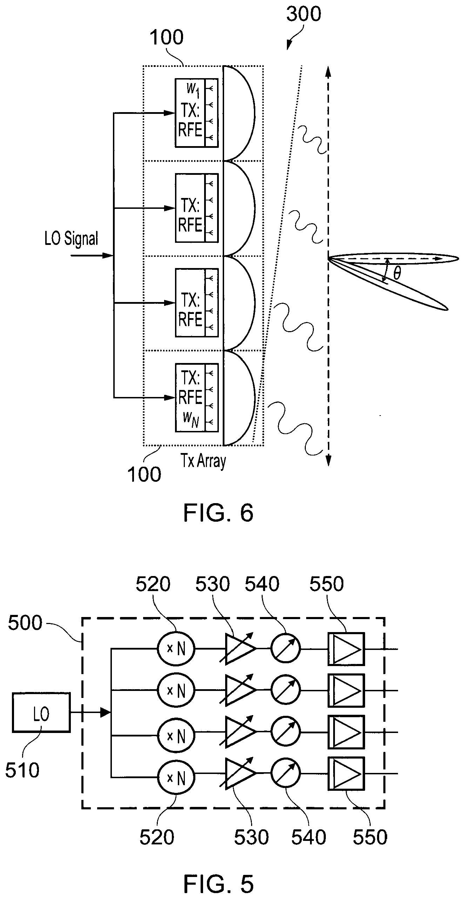

In order to achieve the required beam-forming weights, wi, for each lensed scanning-array transmitter unit 100, a transmitting array operating in analog beam-forming architecture may be used, according to embodiments of the present disclosure, for each Tx RFE IC 500, as illustrated in FIG. 5. The Tx RFE IC may be referred to as a follower IC, since it may be supplied from a separate, leader IC, and generally each follower IC will have the same LO (local oscillator) signal supplied from the same frequency generator or synthesiser 510. The Tx RFE IC will comprise of $N_a$ chains composed of a frequency multiplier ($\times$ N) 520, to upconvert the signal from the LO to the radar frequency, a magnitude controller 530 which sets the relative amplitude for each antenna feed, a phase controller 540 configured to set the relative phase for each antenna feed, and a power amplifier 550 to increase the power (by the same amount) for each antenna feed. This configuration enables combining the power from the transmitters over the air via the lens array. In this situation the total output power is transmitted from up to 4 RF ICs. If we consider to use the maximum power available from 2 Txs, but distributed on 4 Txs, which is equivalent to $2 \times P_{max}$, where $P_{max}$ is the max output power per Tx channel, 4 channels can be simultaneously be active, without compromising thermal IC performance. The power is focused into a single directive beam increasing the overall equivalent isotropic radiated power (EIRP) of the radar system.

FIG. 6 illustrates a lensed scanning-array transmitter unit 100 along with a plurality of three further lensed scanning-array transmitter unit 100, each driven by the same LO signal from a frequency generator or synthesiser 510, in order to provide a steerable multi-lens transmitter 300 such as that shown in FIG. 3.

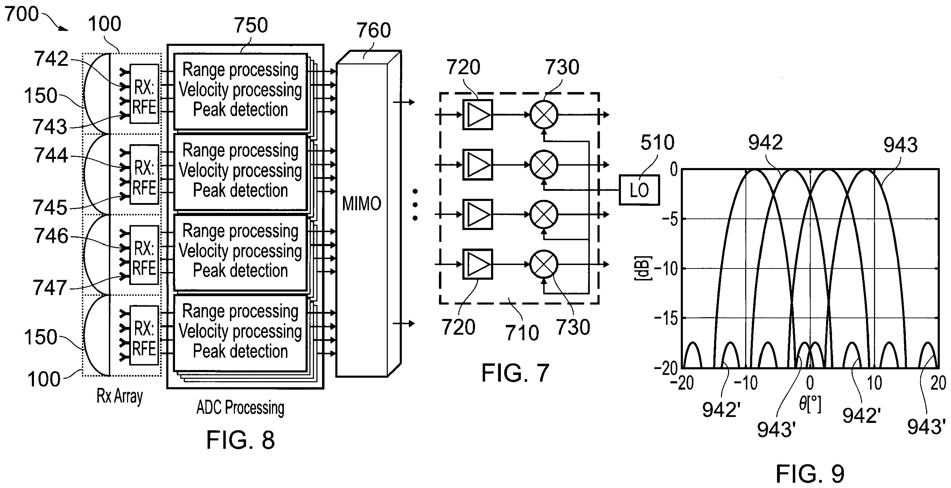

FIG. 7 shows, schematically, a digital beam-forming architecture 700, for a receiving array, consistent with one or more embodiments of the present disclosure, and FIG. 8 illustrates a lensed scanning-array receiver unit 100 along with a plurality of three further such units 100, each driven by the same LO signal from a frequency generator or synthesiser 510, in order to provide a steerable multi-lens receiver. It will be appreciated that the block-level receiver process chain shown in FIG. 8 is the counterpart of the transmitter chain.

The Rx RFE follower chip 710 will comprise of $N_a$ chains composed by a low noise amplifier (LNA) 720 and a frequency down converter 730 per element. On the leader end, there will be a signal processing unit. This unit can perform an initial processing on the range and velocity for each of the signals received by the arrays below each of the lenses 150. This is associated with the incoherent Rx pattern corresponding to one antenna below the lens as shown in FIG. 8. The signals received by the planar antennas located in different units but on the same position relative to that unit (eg 742, 744, 746) are basically the same except for a phase delay element. Thus FIG 9. shows the (incoherent) receive pattern from the groups of antenna which are in the same relative positions at each unit. Thus the receive pattern from antennas 742, 744, 746 are shown in the pattern at 942 (with sidelobes 942'; similarly, the receive pattern from antennas 743, 745, 747 are shown in the pattern at 943 (with sidelobes 943').

The signal to noise ratio (SNR) at this point will be based on the gain of the individual antenna, which corresponds roughly to that of the single lens minus 1-3dBi's. At this point, the units will be able to detect the targets with an angular resolution roughly to that of a single lens, $\Delta\theta \sim \lambda$0 / Dlens. As a second processing step after the analog to digital conversion (ADC) 750, all these signals are combined using digital beamforming (i.e., combine the signals with the weights $w_i$ associated with a specific scanning direction) in the MIMO processing unit 760. The skilled person will appreciate that the ADC processor 750 carries out conventional radar signal analysis including peak detection, and range and velocity processing. The angular resolution and the resulting SNR will increase by Ni. Continuous coverage across the entire FoV may thereby be achieved.

With knowledge of the processing required for one or more lensed scanning-array transmitters and receivers, several radar physical layout architectures which may satisfy a variety of requirements for radar, particularly for but not exclusively limited to automotive radar, will now be described according to embodiments of the present disclosure.

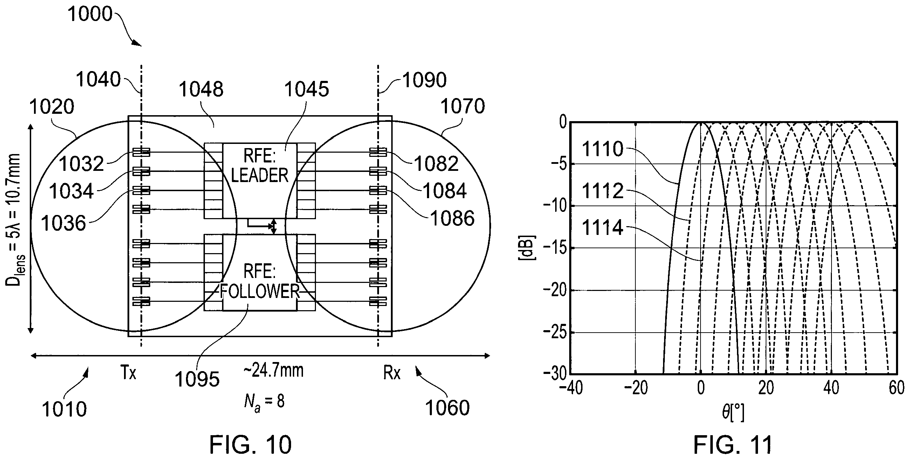

As shown in FIG. 10, according to a first group of embodiments of the present disclosure, there is a scanning-array radar device 1000 comprises a transmitter 1010 and a receiver 1060. The transmitter comprises a single lensed scanning-array transmitter unit, and the receiver comprises a single lensed scanning-array receiver unit. The size of the lens 1020 of the lensed scanning-array transmitter unit and lens 1070 of the lensed scanning-array receiver unit may each be chosen to suit the application, but for typical automotive short range radar applications requiring a wide azimuth scanning, the lenses may be sized to have a diameter Dlens, which may for instance be in a range between $4.\lambda 0$ and $10.\lambda 0$, where $\lambda 0$ is the wavelength of the radar signal. And the spacing may be approximately equal to the wavelength, $\lambda d$, in the lens medium.

The lensed scanning-array transmitter unit includes an array of transmit antennas each having a respective output feed (or feed phase-centre) 1032, 1034, 1036, *etc.* spaced apart along a first axis 1040. The lens 1020 is configured to focus radiation from each of the output feeds. The lensed scanning-array receiver unit includes an array of receive antennas each having a respective input feed 1082, 1084, 1086, *etc.* spaced apart along a second axis 1090. The lens 1070 is configured to focus radiation reflected from a target towards each of the input feeds The second axis may be parallel with the first axis 1040. The lensed scanning-array transmitter unit includes a radio frequency, RF, integrated circuit, IC, configured to operate with the array of transmit antennas as a scanning-array transmitter. The RF IC may be an RFE leader 1045. The RFE leader 1045 may be integrated with the array of transmit antenna output feeds in a package 1048, providing an antenna in package (AiP) configuration. The lensed scanning-array receiver unit includes an RF IC, configured to operate with the array of transmit antennas as a scanning-array transmitter. The RF IC may be an RFE follower 1095. The RFE follower 1095 may be integrated with the array of receive antennas in a package, as an AiP configuration. The package for the receiver may be separate to the package for the transmitter, or they may, as shown in FIG. 10, be the same package. As shown, at an operational frequency of 140 GHz, a lens diameter Dlens of $5.\lambda 0$, corresponds to about 10 point 7 mm. As a result, the scanned array radar device may have dimensions of about 24.7 mm $\times$ 10.7 mm (leaving a gap of just over 3 mm between the lenses.

According to embodiments such as that shown in FIG. 10, each of the transmit and receive lens may be part spherical, or part elliptical, having a circular footprint are shown. In other embodiments, which we considered more detail hereinbelow, the lenses may not have such a high degree of symmetry.

FIG. 11 shows two-way radiation patterns 1110, 1112, 1114, etc., at a variety of azimuth scan angles $\theta$ (11 separate scan angles are shown). The skilled person will recognise that the FIG. shows the product of the radiation patterns transmitted from a transmitter unit, and the radiation pattern received back by a receiver unit - the radiation pattern may therefore be described as being "two-way", and if (for any particular direction) the transmit gain is the same as the receive gain, the two-pattern shows the square of the individual gain pattern. As can be seen, the beam has a width of about 20° (at 15 dBi reduction from its peak gain). Performance metrics for a device such as that shown in FIG. 10 may include a gain

$$G_{tx/rx}^{l}$$

of approximately 22.5 dBi, an azimuth discrimination that is to say an antenna half-power beamwidth

$$\Delta\theta_{3dB}^{TxRx_{A/E}}$$

of 8.4°/8.4°, an accessible fields of view (FOVA) of 100°, a radar range for a 10dBsm target cross-

$$R_{\sigma=10dB}^{Lens}$$

section of of 73.7m, velocity discrimination $\Delta v$ of 2.3 km/h, and a device footprint of about 1cm $\times$ 2.4cm.

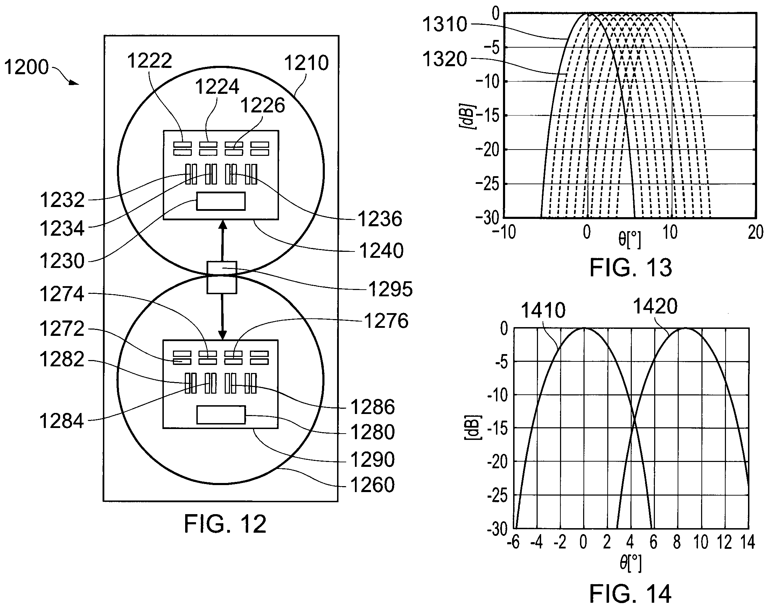

Turning to FIG. 12, according to a second group of embodiments of the present disclosure, there is a scanning-array radar device 1200 comprises a transmitter and a receiver. In such embodiments, the transmitter functionality may be distributed across two lensed scanning-array units 1210 and 1260, and the receiver functionality may be distributed across the same two lensed scanning-array units 1210 and 1260. Each of the units thus may act as a lensed scanning-array transceiver unit. The transceiver units 1210 and 1260 may be functionally and topologically the same.

That is to say, in such embodiments, the first lensed scanning-array transmitter unit is a first lensed scanning-array transceiver unit 1210. In addition to having an array of transmit antennas each having a respective output feed 1222, 1224, 1226 etc. spaced apart along a first, x, axis 1228, the first lensed scanning-array transceiver unit 1210 include a second array of receive antennas each having a respective input feed 1232, 1234, 1236, etc. spaced apart along a third axis 1238 which is parallel to and spaced apart from the first axis. The third axis 1238 may be displaced from the first axis 1228 by a distance corresponding about $1.5* \lambda_d * f_{\#}$, where $\lambda_d$ is the wavelength of the transmitted (or received) radiation in the lens medium, and f# is the focal number of the lens. For a typical 140 GHz radar system with a lens material made out of, for instance, HDPE (high density polyethylene) or PTFE (poly tetra-fluoro-ethylene) plastics material. The separation may be of the order of 1.4 mm. The first lensed scanning-array transceiver unit 1210 includes a first RFE configured to operate with the array of transmit antennas as a scanning-array transmitter, and a second RFE configured to operate with the second array of receive antennas as a scanning-array receiver. The scanning-array transmitter and scanning-array receiver RFEs may be separate ICs each of which may be integrated with the respective antennas to provide a respective antenna-in-package device, or they may be, as shown, integrated into a single RFE 1230 which is integrated with both the transmit antennas and receive antennas, in a single antenna-in-package device 1240.

Similarly, the first lensed scanning-array receiver unit is a first lensed scanning-array transceiver unit 1260. In addition to having an array of receive antennas each having a respective input feed 1272, 1274, 1276, *etc.* spaced apart along a second x' axis 1278, the first lensed scanning-array transceiver unit 1210 include a second array of transmit antennas each having a respective output feed 1282, 1284, 1286, *etc.* spaced apart along a fourth axis 1288 which is parallel to and spaced apart from the second axis. The second lensed scanning-array transceiver unit 1260 includes a first RFE configured to operate with the array of receive antennas as a scanning-array receiver, and a second RFE configured to operate with the second array of transmit antennas as a scanning-array transmitter. The scanning-array transmitter and scanning-array receiver RFEs may be separate ICs each of which may be integrated with the respective antennas to provide a respective antenna-in-package device, or they may be, as shown integrated into a single RFE 1280 which is integrated with both the transmit antennas and receive antennas, in a single antenna-in-package device 1290.

Each of the first scanning-array transceiver units 1210 and second lensed scanning-array transceiver unit 1260, and in particular the RFE's 1230 and 1280, may be fed from a common frequency synthesiser or local oscillator 1295 to provide a common operating frequency. The frequency synthesiser may provide a suitable sub- harmonic of (such as f/4, f/6, or f/8) the operational frequency f of the radar.

In operation, each of the lens of the lensed units 1210, 1260, is fed by the x-plane linear array of planar antennas located on the x-axis at y=0. The signal Tx1 transmitted from the Tx linear array in the lens unit 1210 is received by the Rx linear array in lensed unit 1260. Using these linear arrays, a continuous scanning in azimuth is achieved. FIG. 13 shows the achieved two-way pattern, for a range of scan angles 1310, 1320, *etc*. FIG. 14 shows the radiation pattern in elevation with separate peaks for each of the Tx/Rx pairs, due to the separation vertically on the figure (that is to say in the Y-axis) of the two lenses, elevation discrimination of approximately 9° is achievable between the two plots 1410 and 1420. Each of the lens element is also fed by a second x-plane linear array of planar antennas located at $y \sim 1.5\lambda_d f_\#$, but with orthogonal polarizations to reduce the coupling with the y=0 array. Moreover, these linear array of orthogonally polarized Tx and Rx antennas are switched, relative to the previous lens, as described above and indicated in FIG.12. Therefore, each lens can be integrated with a Tx/Rx combined RFE follower unit as drawn in FIG. 5 and FIG. 7. For a specific frequency modulated continuous wave (FMCW), chirp plan for a lens array topology having 2 lenses of Dlens = $10\lambda_0$ and Na = 4, performance metrics may include a gain $G_{tx/rx}^l$ of approximately 28.2 dBi, an azimuth discrimination, that is to say an antenna half-power beamwidth $\Delta\theta_{3dB}^{TxRx_{A/E}}$ of 4.2°/4.2°, an accessible fields of view (FOV$^A$) of 18°/9°, a radar range for a 10dBsm target cross-section of $R_{\sigma=10dB}^{Lens}$ of 160m, velocity discrimination $\Delta v$ of 0.77 km/h, and a device footprint of about 4.2cm × 2.1cm. From the above performance metrics, it will be apparent to the skilled person that such a topology, which may be referred to Tx/Rx lensing with polarisation multiplexing to achieve azimuth scanning and elevation detection may be well suited for applications such as medium range radar (MRR) for automobile applications.

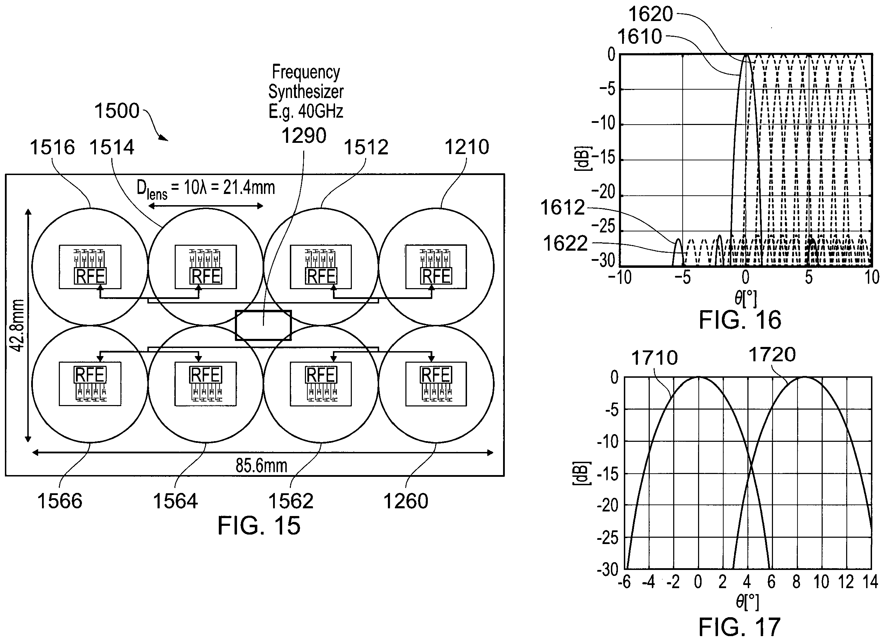

Turning to FIG. 15, according to a third group of embodiments of the present disclosure, there is a scanning-array radar device 1500 comprising a transmitter and a receiver. Similar to the embodiments described above with respect to figure 12, the transmitter functionality is spread across multiple transceivers, as is the receiver functionality. The scanned array radar device includes, again similar to the embodiments shown above with respect to figure 12, a first scanning-array transceiver unit 1210, and a second scanning-array transceiver unit 1260, the pair two units being offset from each other in the y direction. The transceiver units may be similar to that shown in figure 12, and may be fed with a signal, which may be a sub- harmonic of the radar operational frequency, from a single frequency synthesiser or local oscillator 1295. However, in the embodiment shown in figure 15, there are a plurality of further pairs of transceiver units - which are shown may be three further pairs: 1512 & 1562, 1514 & 1564, and 1516 & 1566. The pairs of units are offset along the x-direction. Each of the pairs are fed with a signal, from the frequency synthesiser/local oscillator 1295. Such a configuration may be suitable for, amongst other applications automotive application long-range radar.

Comparing the embodiments shown in FIG. 15 with those shown in FIG. 12, the topology is scaled to an array of lenses for long range applications to enhance the angular resolution. In this configuration two lens arrays of $N_l$ lens elements are implemented. Using these linear lens arrays, a continuous scanning in azimuth with narrow angular resolution is achieved. Fig. 16 shows the achieved two-way pattern, in azimuth, for a range of scan angles $\theta$. Using the multiple transceiver units, in which several (in this case four) antenna feeds are closely grouped together with under each lens, with a larger separation between each group results in signal scan that individual angles having a main peak such as those shown at 1610 and 1620, together with sidelobes such as those shown at 1612 and 1622. FIG. 17 shows the two-way radiation pattern in elevation. Similar to figure 14, this shows discrimination resulting from each pair of transceivers units which are separated in the y direction. Since the plurality of further pairs are aligned to the first pair, and separated by the same distance in the y direction, the discrimination in elevation (response 1710 separation from 1720) is the same as that discussed above with respect to FIG. 14. The expected performances for a specific FMCW chirp plan for a lens array topology having $N_l$ pairs of lenses, each with Dlens = $10\lambda_0$ and Na = 4, include a gain $G_{tx/rx}^l$ of approximately 34.5 dBi, an azimuth discrimination, that is to say, an antenna half-power beamwidth, $\Delta\theta_{3dB}^{TxRx_{A/E}}$ of 1.0°/4.2°, an accessible fields of view (FOV$^A$) of 18°/9°, a radar range for a 10dBsm target cross-section of $R_{\sigma=10dB}^{Lens}$ of 315m, velocity discrimination $\Delta v$ of 3.5 km/h, and a device footprint of about 8.5cm × 4.2cm. From the above performance metrics, it will be apparent to the skilled person that such a topology, which may be referred to an array of Tx/Rx lenses with polarization multiplexing for elevation detection and aiming to achieve narrow resolution in the azimuth scanning may be well suited for applications such as long range radar (LRR) for automobile applications.

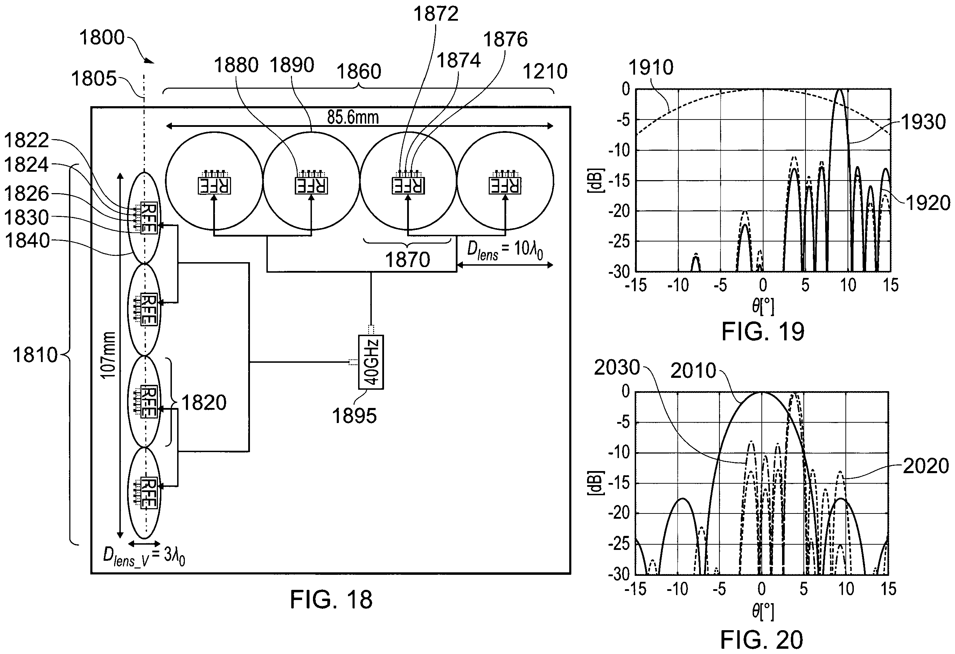

Turning to FIG. 18, according to a third group of embodiments of the present disclosure, there is a scanning-array radar device 1800 comprising a transmitter 1810 and a receiver 1860. The transmitter 1810 comprises a plurality (in the example shown being four) of lensed scanning-array transmitter units 1820. Each lensed scanning-array transmitter unit 1820 comprises an array of transmit antennas each having a respective output feed 1822, 1824, 1826, *etc.* spaced apart along a first axis. It further comprises an RF IC or RFE 1830 configured to operate with the array of transmit antennas as a scanning-array transmitter, and a lens 1840 configured to focus radiation from each of the output feeds. In the example shown, the lenses 1840 are not symmetrical; instead, they are configured to have a different focal length in the y-direction than they do in the x-direction. In plan view then, as shown the lens are not circular, but are elliptical. The lenses may, further, have an electrical profile in the z-direction (that is to say, out of the plane of the paper of the FIG. The skilled person will appreciate that the lenses may have a different configuration provided only that they achieve the same functionality of having a focal length in the y-direction which is different to the focal length in the x-direction.

The scanning-array transmitter units 1820 are offset along a first axis in a y-direction 1805, as shown. Within each transmitter unit 1820, the array of antenna output feeds 1822, 1824, 1826, etc. are spaced apart along the same axis 1805.

The receiver 1860 of the scanned array radar device 1800 comprises a plurality (in the example shown being four) of lensed scanning-array receiver units 1870. Each lensed scanning-array receiver unit 1870 comprises an array of receive antennas each having a respective input feedf 1872, 1874, 1876, *etc.* spaced apart along a second axis. The second axis is orthogonal to the first axis. It further comprises an RF IC or RFE 1880 configured to operate with the array of receive antennas as a scanning-array receiver, and lenses 1890 configured to focus radiation onto each of the input feeds. In the example shown, the lenses 1890 are symmetrical, that is they are circular in plan view. The lenses may, further, have an electrical profile in the z-direction (that is to say, out of the plane of the paper of the FIG.)

The RFE's 1830 and 1880 in each of the scanning-array transmitter units 1820 and scanning-array receiver units 1870 are fed with the same local oscillator signal from a common frequency synthesiser 1895. As above, the frequency synthesiser may be configured to provide a signal which the sub harmonic of the operational frequency of the radar.

Thus, according to this topology, two linear lens arrays of $N_l$ elements are placed orthogonally to each other to achieve narrow angular resolution and continuous scanning in both azimuth and elevation. Each of the lens array is fed by a linear array of planar antennas in the same direction. One array has the Tx antennas with elevation scanning, and the other one has the Rx antennas with azimuth scanning. The shape of the Tx lenses in the azimuth direction is optimized to maximize the azimuth FoV. In the example shown in FIG.18 the Tx lenses are elliptical to reduce the directivity of the Tx array in the azimuth plane. The Rx array has more directivity which results in a narrower FoV in elevation. FIG. 19 shows the achieved two-way radiation patterns at a scanning angle of approximately 4degrees to the normal. The transmitter azimuth radiation pattern is shown at 1910, the receiver radiation pattern is shown at 1920, and the combination, corresponding to the gain of the reflected signal, is shown at 1930. In each case the radiation patterns are normalised to their maximum value. Similarly, FIG. 20 shows the corresponding achieved elevation radiation patterns at the edges of the FoV. The receiver radiation pattern is shown at 2010, the transmitter radiation pattern is shown at 2020, and the combination, corresponding to the gain of the reflected signal, is shown at 2030. In this topology, each lens is integrated with separate Tx/Rx RFE follower units. The expected performances for a specific FMCW chirp plan for such a topology having $N_l$ = 4; Dlens(x) = $10\lambda_0$; Dlens(y) = $3\lambda_0$, and Na = 4, include a transmit gain $G_{tx}^{la}$ of approximately 29.4 dBi, a receive gain $G_{rx}^{la}$ of approximately 34.5 dBi; an azimuth discrimination, that is to say, an antenna half-power beamwidth, $\Delta\theta_{3dB}^{TxRx_{A/E}}$ of 1.4°/1.4°, an accessible fields of view in azimuth/elevation (FOV$^{A/E}$) of 18°/8°, a radar range for a 10dBsm target cross-section of $R^{Lens\ array}_{\sigma=10dB}$ of 308, velocity discrimination $\Delta v$ of 1.16 km/h, and a device footprint of about 10.7cm $\times$ 8.5cm.

From reading the present disclosure, other variations and modifications will be apparent to the skilled person. Such variations and modifications may involve equivalent and other features which are already known in the art of scanning-array radar devices, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims. Furthermore, the word "may" is used in a permissive sense (i.e., meaning having the potential to), rather than the mandatory sense (i.e., meaning must). Similarly, the words "include," "including," and "includes" mean including, but not limited to. Unless stated otherwise, terms such as "first" and "second" are used to arbitrarily distinguish between the elements such terms describe. Thus, these terms are not necessarily intended to indicate temporal or other prioritization of such elements.

## Claims

1. A scanning-array radar device comprising a transmitter and a receiver;

   wherein the transmitter comprises a first lensed scanning-array transmitter unit comprising:

   an array of transmit antennas each having a respective output feed having a phase centre spaced apart along a first axis;
   a radio frequency, RF, integrated circuit, IC, configured to operate with the array of transmit antennas as a scanning-array transmitter, and
   a lens configured to focus radiation from each of the output feeds; and

   wherein the receiver comprises a first lensed scanning-array receiver unit comprising:

   an array of receive antennas each having a respective input feed having a phase centre spaced apart along a second axis;
   an RF IC, configured to operate with the array of receive antennas as a scanning-array receiver, and

   a lens configured to focus radiation reflected from a target towards each of the input feeds.

2. The scanning-array radar device as claimed in claim 1:

   wherein the first lensed scanning-array transmitter unit RF IC and the first lensed scanning-array transmitter unit array of antennas are integrated within a transmitter package, and
   the first lensed scanning-array receiver unit RF IC and the first lensed scanning-array receiver unit array of antennas are integrated within a receiver package.

3. The scanning-array radar device as claimed in claim 1 or 2 wherein the lens is one of elliptical and hyperhemispherical.

4. The scanning-array radar device as claimed in any preceding claim, further comprising:
   a frequency synthesizer configured to provide a common local oscillator signal to the first lensed scanning-array transmitter unit RF IC and to the first lensed scanning-array receiver unit RF IC.

5. The scanning-array radar device as claimed in any preceding claim:

   wherein the transmitter is operable as a first transceiver, the array of transmit antennas is a first array of transmit antennas, and the first lensed scanning-array transmitter unit is a first lensed scanning-array transceiver unit further comprising:

   a second array of receive antennas each having a respective input feed having a phase centre spaced apart along a third axis which is parallel to and spaced apart from the first axis, and
a second radio frequency, RF, integrated circuit, IC, configured to operate with the second array of receive antennas as a scanning-array receiver; and

wherein the receiver is operable as a second transceiver, the array of receive antennas is a first array of receive antennas, and the first lensed scanning-array receiver unit is a second lensed scanning-array transceiver unit further comprising:

a second array of transmit antennas each having a respective output feed having a phase centre spaced apart along a fourth axis which is parallel to and spaced apart from the second axis, and
a second radio frequency, RF, integrated circuit, IC, configured to operate with the second array of transmit antennas as a scanning-array transmitter.

6. The scanning-array radar device as claimed in claim 5 when dependent on claim 4:
wherein the frequency synthesizer is further configured to provide the common local oscillator signal to the first lensed scanning-array transceiver unit second lensed scanning-array transmitter unit RF IC and to the second lensed scanning-array transceiver unit second lensed scanning-array receiver unit RF IC.

7. The scanning-array radar device as claimed in claim 6,
wherein the first axis is parallel to the second axis.

8. The scanning-array radar device as claimed in claim 7;

wherein the second array of receive antennas of the first lensed scanning-array transceiver unit are configured to receive reflected radiation having a polarisation which is orthogonal to a polarisation of radiation transmitted by the first array of transmit antennas of the first lensed scanning-array transceiver unit; and
wherein the first array of receive antennas of the second lensed scanning-array transceiver unit are configured to receive reflected radiation having a polarisation which is orthogonal to a polarisation of radiation transmitted by the second array of transmit antennas of the second lensed scanning-array transceiver unit.

9. The scanning-array radar device as claimed in claim 7 or 8;

wherein the second array of receive antennas of the first lensed scanning-array transceiver unit is configured to receive radiation reflected by a target from radiation transmitted by the second array of transmit antennas of the second lensed scanning-array transceiver unit; and
wherein the first array of receive antennas of the second lensed scanning-array transceiver unit is configured to receive radiation reflected by the target from radiation transmitted by the first array of transmit antennas of the first lensed scanning-array transceiver unit.

10. The scanning-array radar device as claimed in any of claims 7 to 9,
wherein the phased array transmitter of the first lensed scanning-array transmitter unit is configured to scan over angular range of at least 80°.

11. The scanning-array radar device as claimed in any of claims 7 to 10,
configured to operate as an automotive radar having an azimuth half-power beamwidth of less than 3°. and an elevation resolution of less than 20°.

12. The scanning-array radar device as claimed in any of claims 7 to 11, further comprising:

a first plurality of transceivers, aligned with the first transceiver along the first axis, and
a second plurality of transceivers, aligned with the second transceiver along the second axis.

13. The scanning-array radar device as claimed in claim 12:

wherein each of the first transceiver and the first plurality of transceivers abuts a neighbouring transceiver of the first transceiver and the first plurality of transceivers; and
wherein each of the second transceiver and the second plurality of transceivers abuts a neighbouring transceiver of the second transceiver and the second plurality of transceivers, and abuts a transceiver of the first transceiver and the first plurality of transceivers.

14. The scanning-array radar device according to any of claims 1 to 6 15, further comprising:

a first plurality of transmitters, aligned with the first transmitter along the first axis, and
a plurality of receivers, aligned with the receiver along the second axis.

15. The scanning-array radar device according to claim 14, wherein:
The lens of the transmitter and a lens of each of the plurality of transmitters each have first focal length, in a direction of the first axis, and a second focal length, different to the first focal length, in a direction of the second axis.

FIG. 1

FIG. 2

FIG. 3

FIG. 4

FIG. 6

FIG. 5

FIG. 8

FIG. 7

FIG. 9

FIG. 10

FIG. 11

EP 4 621 993 A1

FIG. 13

FIG. 14

FIG. 12

FIG. 16

FIG. 17

FIG. 15

Frequency Synthesizer E.g. 40GHz

$D_{lens} = 10\lambda = 21.4mm$

85.6mm

42.8mm

FIG. 19

FIG. 20

FIG. 18

Europäisches
Patentamt

European
Patent Office

Office européen
des brevets

## EUROPEAN SEARCH REPORT

**Application Number**

EP 24 38 6029

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2022/413114 A1 (CHARVAT GREGORY L [US] ET AL) 29 December 2022 (2022-12-29)<br>* abstract; figures 5-13 *<br>* paragraph [0218] - paragraph [0290] *<br>----- | 1-4,14,<br>15<br>5-13 | INV.<br>H01Q1/32<br>G01S13/931<br>H01Q3/26<br>H01Q3/34 |
| A | US 2018/231651 A1 (CHARVAT GREGORY L [US]) 16 August 2018 (2018-08-16)<br>* abstract; figures 1F, 2A, 3 *<br>----- | 1-15 | H01Q19/06<br>H01Q21/08 |
| A | US 2005/128144 A1 (HIMMELSTOSS ARMIN [DE] ET AL) 16 June 2005 (2005-06-16)<br>* abstract; figures 1-3 *<br>----- | 1-15 | |
| A | US 2014/077995 A1 (ARTEMENKO ALEKSEY ANDREEVICH [RU] ET AL)<br>20 March 2014 (2014-03-20)<br>* abstract; figures 1-4 *<br>----- | 1-15 | |

**TECHNICAL FIELDS
SEARCHED        (IPC)**

H01Q
G01S

The present search report has been drawn up for all claims

| Place of search | Date of completion of the search | Examiner |
|---|---|---|
| The Hague | 28 August 2024 | Vial, Antoine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                             

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 38 6029

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | | Publication date | Patent family member(s) | | Publication date |
|---|---|---|---|---|---|
| US 2022413114 | A1 | 29-12-2022 | EP | 4359813 A1 | 01-05-2024 |
| | | | TW | 202310492 A | 01-03-2023 |
| | | | US | 2022413114 A1 | 29-12-2022 |
| | | | US | 2022413126 A1 | 29-12-2022 |
| | | | US | 2022413141 A1 | 29-12-2022 |
| | | | WO | 2022271646 A1 | 29-12-2022 |
| US 2018231651 | A1 | 16-08-2018 | NONE | | |
| US 2005128144 | A1 | 16-06-2005 | DE | 10205379 A1 | 21-08-2003 |
| | | | EP | 1476921 A1 | 17-11-2004 |
| | | | JP | 4118815 B2 | 16-07-2008 |
| | | | JP | 2005517335 A | 09-06-2005 |
| | | | US | 2005128144 A1 | 16-06-2005 |
| | | | WO | 03067709 A1 | 14-08-2003 |
| US 2014077995 | A1 | 20-03-2014 | EP | 2715869 A1 | 09-04-2014 |
| | | | RU | 2013156505 A | 27-06-2015 |
| | | | US | 2014077995 A1 | 20-03-2014 |
| | | | WO | 2012161612 A1 | 29-11-2012 |

EPO FORM P0459

For more details about this annex : see Official Journal of the European Patent Office, No. 12/82